# EUROPÄISCHE PATENTSCHRIFT

(11) **EP 3 785 983 B1**
(45) Veröffentlichungstag und Bekanntmachung des Hinweises auf die Patenterteilung: **30.03.2022**
(21) Anmeldenummer: 20192804.1
(22) Anmeldetag: 26.08.2020
(51) Int. Cl.: B60N 2/07, B60N 2/075

(54) **BODENSCHIENE FÜR EIN FAHRZEUG, ANBRINGVORRICHTUNG UND FAHRZEUG**
FLOOR RAIL FOR A VEHICLE, ATTACHMENT DEVICE AND VEHICLE
RAIL DE PLANCHER POUR UN VÉHICULE, DISPOSITIF DE MONTAGE ET VÉHICULE

(30) Priorität: 27.08.2019 DE 102019122980
(43) Veröffentlichungstag der Anmeldung: 03.03.2021
(73) Patentinhaber: Aguti Produktentwicklung & Design GmbH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- DE-A1- 4 237 808
- GB-A- 1 291 733
- JP-U- H04 131 532

## Beschreibung

### Stand der Technik

Bei der Fertigstellung von Fahrzeugen im Hinblick auf unterschiedliche Einbauten wie zum Beispiel der Montage von Fahrzeug-Inneneinrichtungen wie eine Sitzanordnung und dergleichen sind technische und wirtschaftliche Gesichtspunkte zu berücksichtigen. Insbesondere ist es erwünscht, dass die hierfür im Fahrzeug zu schaffenden Voraussetzungen vorteilhaft herstellbar und einfach zu montieren sind. Häufig ist eine Schienenanordnung mit vorzugsweise mehrere Bodenschienen im Fahrzeug vorgesehen, die an einem Fahrzeugboden integral vorhanden oder nachträglich einbaubar ist,siehe die DE-A-42 37 808

An der Fahrzeug-Bodenschiene sind die Einbauten anbringbar, vorzugsweise anpassbar in ihrer Einbau-Position entlang der Bodenschiene und daran lösbar fixierbar.

### Aufgabe und Vorteile der Erfindung

Aufgabe der vorliegenden Erfindung ist es, eine Bodenschiene der eingangs genannten Art im Hinblick auf wirtschaftliche und technische Gesichtspunkte und bezüglich der Montage von Einbauten in einem Fahrzeug vorteilhaft bereitzustellen.

Diese Aufgabe wird durch die unabhängigen Ansprüche 1 und 2 gelöst.

In den abhängigen Ansprüchen sind zweckmäßige und vorteilhafte Ausgestaltungen der Erfindung aufgezeigt.

Die Erfindung geht aus von einer Bodenschiene für ein Fahrzeug, insbesondere von einer Fahrzeug-Bodenschiene. Die Bodenschiene ist für die Anbringung einer Fahrzeug-Inneneinrichtung und/oder einer Sitzanordnung oder anderer Einbauten in einem Fahrzeug wie einem PKW, einem Campingfahrzeug oder einem Kleintransporter ausgebildet, wobei die Bodenschiene hohl ist und eine Oberseite mit einem Längsschlitz aufweist. Hierfür sind bevorzugt mehrere vorzugsweise identische parallel im Fahrzeug vorhandene Bodenschienen z. B. zur Unterbringung einer Sitzanordnung vorgesehen. Die Bodenschienen verlaufen in ihrer Längserstreckung bevorzugt parallel zur Fahrzeuglängsachse. Die Bodenschienen können integral am Fahrzeugboden ausgebildet sein oder daran nachträglich eingebaut zum Beispiel angeschraubt oder angeschweißt sein. Die Anbindung der Inneneinrichtung bzw. z. B. der Fahrzeugsitzanordnung wie ein Einzelfahrzeugsitz oder eine Zweier- oder Dreier-Fahrzeugsitzbank erfolgt in der Regel an zumindest zwei parallelen Bodenschienen. Die Bodenschiene ist vorzugsweise kompakt bauend und weist eine Höhe und Breite im Zentimeterbereich auf, bei einer Länge im Meterbereich, je nach Länge des im Fahrzeug zu bestückenden Innenraums. Der Längsschlitz der Bodenschiene ist vorzugsweise durchgehend über die Länge der Bodenschiene ausgebildet.

Der Kern der Erfindung liegt darin, dass die Bodenschiene über ihre Längserstreckung eine als Hohlprofil ausgebildete Außenschiene aufweist mit in Längsrichtung der Bodenschiene sich erstreckenden gegenüberliegenden Schienen-Längswänden und einem Schienenboden, wobei der Schienenboden der Oberseite der Bodenschiene gegenüberliegt und die Schienen-Längswände miteinander verbindet, und wobei eine Innenschiene vorgesehen ist, die innerhalb der hohlen Außenschiene aufgenommen ist, wobei die Außenschiene aus einem ersten Werkstoff besteht und wobei die Innenschiene aus einem zweiten Werkstoff besteht, wobei die Innenschiene in einer Innenschienen-Wand mehrere Ausnehmungen umfasst, wobei in einer an die Innenschienen-Wand angrenzenden Schienen-Längswand der Außenschiene eine Außenschienen-Ausnehmung vorhanden ist, wobei die Außenschienen-Ausnehmung an mehrere der Ausnehmungen in der Innenschienen-Wand anschließt, vorzugsweise an sämtliche der Ausnehmungen in der Innenschienen-Wand anschließt. Das zweite Material unterscheidet sich vom ersten Material. Damit wird eine Hybrid-Bodenschiene bereitgestellt, die im Hinblick auf die Fertigung bzw. Herstellung, Bearbeitung und technischen Eigenschaften verbessert ist gegenüber einer herkömmlichen insbesondere einer einheitlich aufgebauten bzw. aus genau einem Material bestehenden Bodenschiene.

Vorteilhafterweise weist die erfindungsgemäße Bodenschiene durch ihre Hybrid-Struktur eine gegenüber aus genau einem Material bzw. aus einheitlich aus zum Beispiel einem Stahlmaterial gebildeten Bodenschiene vergleichsweise höhere Festigkeit und/oder eine höhere Elastizität auf.

Bei einer erfindungsgemäßen Bodenschiene mit einer daran befestigten Fahrzeug-Inneneinrichtung nimmt die Außenschiene bezogen auf die Nutzzustand im Fahrzeug vorteilhaft vergleichsweise hohe Kräfte und/oder Momente in vertikaler Richtung auf und die Innenschiene nimmt vorteilhaft vergleichsweise hohe Kräfte und/oder Momente in horizontaler Richtung auf.

Insbesondere lässt sich die Bodenschiene bezüglich der Formgebung und Bearbeitung einerseits und der Belastbarkeit bzw. der mechanischen Stabilität andererseits optimal abstimmen. Vorzugsweise ist die Bodenschiene als Zweikomponenten-Bauteil aufgebaut mit einem äußeren Gehäuse aus dem ersten Werkstoff bzw. Material und einem Inneren, zum Beispiel einem Inlay aus dem zweiten Werkstoff. Vom Volumen der Bodenschiene macht die Außenschiene vorzugsweise den überwiegenden Anteil der Bodenschiene aus, zum Beispiel zwei Drittel. Vorzugsweise ist das erste Material härter als das zweite Material. Das zweite Material ist vorzugsweise leichter als das erste Material bzw. das zweite Material weist eine geringere Dichte auf als das erste Material.

Die Außenschiene bildet insbesondere die Außenform bzw. die Außenseite der Bodenschiene. Die Bodenschiene ist außerdem vorzugsweise ausgebildet für die Befestigung an einem Fahrzeugboden, beispielsweise mit Schrauböffnungen versehen. Der Längsschlitz der Bodenschiene ist dementsprechend insbesondere durch einen oberseitigen vorzugsweise durchgehende über die Länge bzw. nicht zwischen den beiden Enden der Schiene unterbrochenen Längsschlitz in der Außenschiene gebildet.

In einem von der Außenschiene gebildeten Schienenhohlraum ist die Innenschiene vorzugsweise komplett untergebracht, zum Beispiel stirnseitig an der Außenschiene eingeschoben. Die Länge der Außenschiene und die Länge der Innenschiene sind zumindest im Wesentlichen gleich. Die Innenschiene grenzt mit ihrer Außenseiten an den Schienenboden und an zumindest eine Schienen-Längswand an, wenn die Innenschiene L-förmig ist. Vorzugsweise ist die Innenschiene U-förmig und grenzt mit ihren gegenüberliegenden freien Schenkeln innen an beide Schienen-Längswände der Außenschiene an. Die Innenschiene weist vorzugsweise einen Innenschienen-Boden und eine Innenschienen-Wand auf, wobei der Innenschienen-Boden und die Innenschienen-Wand abgewinkelt zueinander ausgerichtet sind. Die Bodenschiene ist als Verbund- bzw. Hybrid-Schiene bzw. als Hybridmaterial-Schiene gestaltet aus einem Materialmix, wobei die Außenschiene einheitlich aus dem ersten Material besteht und die Innenschiene einheitlich aus dem zweiten Material besteht.

Die Außenschiene umfasst den oberseitigen Längsschlitz, wobei dieser oberhalb einer oben offenen Seite der z. B. U-förmigen Innenschiene vorhanden ist. Damit wird ein von oben zugängliches Hohlvolumen der Bodenschiene mit einem von oben betrachtet Hinterschnittbereich bereitgestellt.

Der Werkstoff der Außenschiene ist vorzugsweise leichter als der vergleichsweise härtere Werkstoff der Innenschiene, was hinsichtlich einer Abnutzung und einer maximalen Belastbarkeit der Bodenschiene in einem Belastungsfall wie einem Unfall- oder Crash-Szenario des Fahrzeugs mit z. B. einem über erfindungsgemäße Bodenschienen fixierten Fahrzeugsitz von Vorteil ist.

Die Außenschiene umfasst die Oberseite der Bodenschiene mit einem den Längsschlitz begrenzenden Stützabschnitt. Der Stützabschnitt ist vorzugsweise über die gesamte Länge der Außenschiene beidseitig des Längsschlitzes vorhanden.

Die Erfindung geht weiter davon aus, dass die Bodenschiene über ihre Längserstreckung eine als Hohlprofil ausgebildete Außenschiene aufweist mit in Längsrichtung der Bodenschiene sich erstreckenden gegenüberliegenden Schienen-Längswänden und einem Schienenboden, wobei der Schienenboden der Oberseite der Bodenschiene gegenüberliegt und die Schienen-Längswände miteinander verbindet, und wobei eine Innenschiene vorgesehen ist, die innerhalb der hohlen Außenschiene aufgenommen ist, wobei die Außenschiene aus einem ersten Werkstoff besteht und wobei die Innenschiene aus einem zweiten Werkstoff besteht, wobei die Innenschiene im Innenschienen-Boden mehrere Ausnehmungen umfasst, die in Längsrichtung der Innenschiene voneinander beabstandet vorhanden sind, wobei in einem Schienenboden der Außenschiene eine Schienenboden-Ausnehmung vorhanden ist, wobei die Schienenboden-Ausnehmung an sämtliche der Ausnehmungen im Innenschienen-Boden anschließt. Die Schienenboden-Ausnehmung in der Außenschiene kann durch mehrere voneinander getrennte Einzelausnehmungen gebildet sein oder als eine durchgehende Nut oder als durchgehender Kanal.

Dann sind vorzugsweise keine Ausnehmungen in einer Innenschienen-Wand und einer Schienen-Längswand vorgesehen.

Es ist von Vorteil, wenn die Außenschiene und die Innenschiene fest miteinander verbunden sind. Die beiden Schienen sind insbesondere nach deren Zusammenfügen lösbar oder dauerhaft miteinander verbunden z. B. vernietet, verschweißt, verschraubt und/oder verklemmt. Damit wird eine mechanisch hoch belastbare Bodenschiene bereitgestellt. Die Bodenschiene ist insbesondere in Längsrichtung der Bodenschiene und quer dazu vergleichsweise hoch stabil bzw. auf Zug und/oder Druck belastbar.

Vorteilhaft ist die Außenschiene aus einem Leichtmetallwerkstoff wie beispielsweise einem Aluminiumwerkstoff gebildet.

Das Außenschienen-Material bzw. der erste Werkstoff hat eine Dichte vorzugsweise unter 5,0 g/cm³. Vorzugsweise besteht die Außenschiene aus einem Aluminium-Material bzw. aus einer Aluminium-Legierung.

Gemäß einer anderen vorteilhaften Modifikation der Erfindung ist die Außenschiene ein Strangpressprofil. Damit ist die Herstellung der Außenschiene vorzugsweise aus einem wirtschaftlich und technisch gut schmelzbaren Metallwerkstoff wie einem Aluminium-Werkstoff einfach und wirtschaftlich möglich.

Es ist überdies von Vorteil, wenn die Innenschiene aus einem Stahlmaterial gebildet ist. Eine Innenschiene aus Stahl vorzugsweise aus einem Edelstahl-Material bzw. Edelstahl-Blechmaterial ist korrosionsbeständig, stabil und wirtschaftlich vorteilhaft herstellbar und umformbar durch gängige Umform-Verfahren. Ein Edelstahlmaterial weist vorzugsweise eine zu anderen Metallen bzw. zu einem Leichtmetall vergleichsweise hohe Härte auf und ist damit im Hinblick auf ein Abnutzungs- und Verschleißverhalten vorteilhaft. Ein praxisrelevantes Ausschaffen von aufgrund der Verrastung beanspruchter Konturen der Innenschiene wie Ränder der Ausnehmungen wird so verhindert.

Eine alternative vorteilhafte Ausbildung der Erfindung zeichnet sich dadurch aus, dass die Innenschiene als Blech-Kantprofil ausgebildet ist. Damit ist die Herstellung mit einem Biege- oder einem anderen Umformprozess aus einem standardmäßig in einer Vielzahl von Sorten bereitstellbaren Blechmaterial vorteilhaft möglich. Vorzugsweise ist die Innenschiene exakt und mit hoher Maßgenauigkeit z. B. aus einem Laser- und/oder Stanz-Blechbauteil gebildet. Dies ist zudem vergleichsweise kostengünstig in der Produktion.

Nach einer weiteren vorteilhaften Modifikation der Erfindung weist die Innenschiene einen Innenschienen-Boden und eine Innenschienen-Wand auf, wobei der Innenschienen-Boden und die Innenschienen-Wand abgewinkelt zueinander ausgerichtet sind. Damit ist die Herstellung der Innenschiene aus einem flächigen einstückigen Rohling wie einem Blech zu einem Kant- bzw. Biegeteil mit zueinander winklig ausgerichteten Abschnitten vorteilhaft möglich. Mit der zum Boden abgewinkelten Wand wird eine hohe Steifigkeit und Verwindungsstabilität der Innenschiene und damit der Bodenschiene ermöglicht.

Ein Vorteil ergibt sich, wenn die Innenschiene U-förmig im Querschnitt ausgebildet ist mit einem Innenschienen-Boden und jeweils einer Innenschienen-Wand beidseitig des in Längsrichtung verlaufenden Innenschienen-Bodens. Die Innenschiene ist vorzugsweise mit ihrer Außenform an eine Innenform passend abgestimmt, wobei Innenform das hohle Innenvolumen der Außenschiene umgibt. Die Innenschiene kleidet damit einen vorzugsweise überwiegenden Bereich der Innenoberfläche der Außenschien aus. Die Innenschiene bildet einen innenliegenden harten Oberflächenschutz der Außenschiene.

Die Innenschiene ist mit vergleichsweise geringem Materialeinsatz herstellbar. Die Innenschiene ist geeignet, flächig anschmiegend an Innenseiten der hohlen U-förmigen Außenschiene mit dieser verbunden zu werden, was eine kompakte und mechanisch hoch stabile Zweikomponenten-Struktur ermöglicht.

Gemäß einer vorteilhaften Variante der Erfindung weist die Innenschiene und/oder die Außenschiene eine Rastkontur auf, zur Fixierung eines an der Bodenschiene anbringbaren Rastbauteils wie eines Schlittens. Die Rastkontur und das Rastbauteil sind vorzugsweise ein Teil einer Anbring- und/oder Verriegelungsanordnung. Der Schlitten dient zur Anbringung einer Einbauanordnung wie einer Sitzanordnung in einem Fahrzeug an der im Fahrzeug vorhandenen Bodenschiene. Der Schlitten und die Bodenschiene sind vorzugsweise so aufeinander abgestimmt, dass die Bodenschiene und der mit einer Einbauvorrichtung verbindbare Schlitten, der z. B. mit einer Unterkonstruktion einer Fahrzeugsitzanordnung verbindbar ist, über eine Verriegelungsanordnung lösbar entlang der Bodenschiene in unterschiedlichen Längspositionen der Bodenschiene verrastbar ist. Dabei dient die Rastkontur zum eingreifenden Verrasten eines Verriegelungselements der Verriegelungsanordnung. Die Verrastung ist lösbar aber gesichert.

Da der Längsschlitz in der Bodenschiene bzw. der Außenschiene vorzugsweise durchgehend bzw. ohne Unterbrechung ausgebildet ist, ist der Schlitten entlang der Bodenschiene bzw. oberseitig daran, wobei sich der Schlitten unterseitig an der Oberseite bzw. der Bodenschiene abstützt, an der Bodenschiene vorzugsweise über deren komplette Länge bzw. in Längsrichtung entlang der Bodenschiene hin- und herverfahrbar. Dabei kann aufgrund des durchgehenden Längsschlitzes ein Abschnitt des nicht verrasteten Schlittens in den materialfreien Bereich des Längsschlitzes bzw. zwischen den Stegen eingreifen.

An der Oberseite der Bodenschiene ist der zur Bodenschiene passende Schlitten einer zum Beispiel Anbringvorrichtung abstützbar. Der Schlitten ist zum Beispiel Teil der Anbringvorrichtung für eine Sitzanordnung in einem Fahrzeug, wobei die Bodenschiene Teil der Vorrichtung sein kann. Der Schlitten ist mit Hilfe des Verriegelungselements der Verriegelungsanordnung an der Bodenschiene lösbar fixierbar bzw. verrastbar.

Vorteilhaft umfasst die Innenschiene in zumindest einer Innenschienen-Wand mehrere Ausnehmungen, die in Längsrichtung der Innenschiene voneinander beabstandet vorhanden sind. Mit den vorzugsweise untereinander identischen Ausnehmungen kann ein zu einer Ausnehmung passender Verriegelungselement der Verriegelungsanordnung zusammenwirken, um den Schlitten an der Bodenschiene lösbar zu fixieren. Das Verriegelungselement kann hierzu verstellbar entweder in eine Ausnehmung eingreifen, was den Verriegelungszustand des Schlittens an der Bodenschiene bedeutet, oder aus der Ausnehmung herausbewegt sein, dann ist der Schlitten nicht verriegelt an der Bodenschiene. Im nicht verriegelten Zustand des Schlittens ist der Schlitten an der Bodenschiene entlangbewegbar bzw. von der Bodenschiene nach oben abhebbar.

Die Ausnehmungen sind vorzugsweise durch das Material der Innenschienen-Wand durchgehend, also ein materialfreies Loch bildend. Die Ausnehmungen sind zum Beispiel mehreckig bzw. fensterartig.

Die Ausnehmungen sind vorzugsweise regelmäßig beabstandet und gleichartig bzw. genau gegenüberliegend in einer Innenschienen-Wand vorhanden, vorzugsweise sind entsprechende Ausnehmungen in beiden gegenüberliegenden Innenschienen-Wänden vorhanden.

Die Ausnehmungen sind vorzugsweise aus z. B. einem dünnen zum Beispiel Edelstahl- bzw. Stahl-Blechabschnitt der Innenschienen-Wand herausgearbeitet durch ein schneidendes, stanzendes und/oder spanabhebendes Verfahren.

Es kann zudem von Vorteil sein, wenn die Innenschiene im Innenschienen-Boden mehrere Ausnehmungen umfasst, die in Längsrichtung der Innenschiene voneinander beabstandet vorhanden sind. Damit kann die Verriegelungswirkung in der Bodenschiene allein oder zusätzlich zu einer Verriegelung an der Innenschienen-Wand im Bereich des Innenschienen-Bodens erfolgen. Vorzugsweise sind bei vorhandenen Ausnehmungen im Innenschienen-Boden dann in weiteren Abschnitten der Innenschiene keine Ausnehmungen vorgesehen, insbesondere keine Ausnehmungen in einer Innenschienen-Wand bzw. keine Ausnehmungen in beiden gegenüberliegenden Innenschienen-Wänden.

Vorteilhafterweise umfasst die Innenschiene in einer Innenschienen-Wand mehrere Ausnehmungen, wobei in einer an die Innenschienen-Wand angrenzenden Schienen-Längswand der Außenschiene eine Außenschienen-Ausnehmung vorhanden ist, welche an eine Ausnehmung in der Innenschienen-Wand anschließt. Eine durch Materialwegnahme gewonnene Eingreif-Tiefe der Bodenschiene für ein Verriegelungselement ist damit größer verglichen mit einer Ausnehmung allein in der vergleichsweise dünnen Innenschiene, womit eine Eingreiftiefe ggf. zu gering wäre bzw. maximal im Maß der Dicke der Innenschien möglich wäre. Mit der zusätzlichen Ausnehmung in der Außenschiene wird mehr Raum zum Durchgreifen und/oder ein größere Tiefe zum Einhaken eines Verriegelungselements an der Bodenschiene bereitgestellt. Die Eintauchtiefe für das Verriegelungselement ergibt sich dann aus der Tiefe der Ausnehmung in der Innenschiene plus der Tiefe der dahinter liegenden anschließenden Tiefe der Außenschienen-Ausnehmung. Vorzugsweise ist jeder Ausnehmung der Innenschiene eine dazugehörige Ausnehmung in der Außenschien zugeordnet bzw. sind die Ausnehmungen immer paarweise benachbart vorhanden. Das eingreifende Verrieglungselement greift im Verriegelungszustand des Schlittens von innen in die dazugehörige vergrößerte Ausnehmung an Innen- und Außenschiene.

Eine durchgehende z.B. kanalförmige Ausnehmung ist vorteilhaft bereitstellbar mit der Herstellung der Außenschiene als Strangpressprofil gegenüber ausgesparten fensterartigen offenen Ausnehmungen in der Außenschiene aus Aluminium, da diese in einem Alumaterial zeitaufwändig bzw. kostenintensiv spanabhebend gefräst oder gebohrt werden müssen.

Es ist dabei vorteilhaft, dass in einem Verriegelungszustand z. B. eines Schlittens an der Bodenschiene, die gesamt zur Verfügung stehende Eintauchtiefe für das Verriegelungselement sich vorteilhaft aus der Tiefe einer jeweiligen Ausnehmung in der Innenschiene und aus der Tiefe der Außenschienen-Ausnehmung zusammensetzt, wobei die Tiefe der Außenschienen-Ausnehmung in der Regel größer ist als die Tiefe der Innenschienen-Ausnehmung, welche der Wandstärke bzw. der Dicke der Innenschiene entspricht.

Bevorzugt sind mehrere voneinander getrennte Ausnehmungen in einer oder beiden Innenschienen-Wänden vorhanden, wobei eine durchgehende bzw. nicht unterbrochene Außenschienen-Ausnehmung der Innenschienen-Wand einer Außenschienen-Wand vorhanden ist, so dass hinter jeder Ausnehmung der Innenschiene eine Ausnehmung der Außenschiene unmittelbar anschließt. Die Außenschienen-Ausnehmung ist vorzugsweise als durchgehende Vertiefung zum Beispiel kanal- oder nutförmig in der Außenschiene bzw. in den beiden Schienen-Längswänden vorhanden. Die Außenschienen-Ausnehmung bzw. die Vertiefung ist demgemäß vorzugsweise kein Schlitz oder Spalt in der Außenschiene, es bleibt vorzugsweise ein Restbodenstärke vorhanden, sondern ist bevorzugt eine rinnenartige Vertiefung zum Beispiel eine innenseitige längliche durchgehende Vertiefung. Die Breite der Vertiefung entspricht vorzugsweise der Breite der jeweiligen Ausnehmungen. Mit der rinnenartigen durchgehenden Ausnehmung in der Schienen-Längswand der Außenschiene auch hinter nicht ausgenommenen Bereichen der Innenschiene zwischen zwei benachbarten Ausnehmungen vorhanden ist.

Gemäß einer Abwandlung der Erfindung umfasst die Innenschiene eine erste Innenschienen-Wand mit mehreren Ausnehmungen und eine zweite gegenüberliegenden Innenschienen-Wand mit mehreren Ausnehmungen, wobei in einer an die erste Innenschienen-Wand angrenzende ersten Schienen-Längswand der Außenschiene eine erste Außenschienen-Ausnehmung vorhanden ist, wobei die erste Außenschienen-Ausnehmung an sämtliche der Ausnehmungen in der ersten Innenschienen-Wand anschließt, und wobei in einer an die zweite Innenschienen-Wand angrenzende zweite Schienen-Längswand der Außenschiene eine zweite Außenschienen-Ausnehmung vorhanden ist, wobei die zweite Außenschienen-Ausnehmung an sämtliche der Ausnehmungen in der zweiten Innenschienen-Wand anschließt.

Die Außenschienen-Ausnehmungen sind vorzugsweise über die gesamte Länge der Außenschiene durchgehend z. B. rinnen- oder kanalförmig ausgebildet. Vorzugsweise sind dann keine Ausnehmungen im Innenschienen-Boden und im Schienenboden der Außenschiene vorgesehen.

Die Erfindung erstreckt sich auch auf eine Vorrichtung zur Anbringung einer Fahrzeug-Inneneinrichtung und/oder einer Sitzanordnung in einem Fahrzeug, wobei die Vorrichtung einen mit der Sitzanordnung verbindbaren Schlitten und eine Bodenschiene nach einer der vorhergehenden Ausbildungen aufweist.

Von Vorteil ist es, dass eine Verriegelungsanordnung der Anbringvorrichtung Ausnehmungen umfasst, die in Längsrichtung der Bodenschiene voneinander beabstandet vorhanden sind, und ein Verriegelungselement der Verriegelungsanordnung einen Riegelabschnitt und einen Anlageabschnitt derart aufweist, dass bei der Fixierung des Schlittens der Riegelabschnitt in eine Ausnehmung in der Bodenschiene eintaucht und der Anlageabschnitt an einer Innenseite des Stützabschnitts in Anlage kommt, so dass im verriegelten Zustand mit dem Riegelabschnitt eine Bewegung des Schlittens in Längsrichtung der Bodenschiene blockiert ist und mit dem Anlageabschnitt ein Abheben des Schlittens von der Bodenschiene unterbunden ist.

Der Schlitten ist an der Bodenschiene anordenbar und im angeordneten aber nicht verriegelten bzw. nicht verrasteten Zustand in Längsrichtung der Bodenschiene bewegbar und an unterschiedlichen Stellen in Längsrichtung der Bodenschiene fixierbar. Die Bodenschiene ist vorzugsweise als Hohlprofil mit in Längsrichtung der Bodenschiene sich erstreckenden gegenüberliegenden Schienen-Längswänden ausgebildet. Zwischen den Schienen-Längswänden weist die Außenschiene einen Schienenhohlraum der Bodenschiene mit der Innenschiene auf. Die Bodenschiene weist einen Längsschlitz mit einem den Längsschlitz begrenzenden Stützabschnitt auf. Der Stützabschnitt weist eine Außenseite auf, an der sich der Schlitten im angeordneten Zustand des Schlittens an der Bodenschiene abstützt, wobei der Stützabschnitt eine der Außenseite gegenüberliegende Innenseite aufweist, die an den Schienenhohlraum angrenzt, wobei zur Fixierung des an der Bodenschiene angebrachten Schlittens eine Verriegelungsanordnung mit einem am Schlitten verstellbar aufgenommenen Verriegelungselement vorgesehen ist.

Vorzugsweise ist an einem Verriegelungselement ein Riegelabschnitt oder bevorzugt sind mehrere zueinander versetzte Riegelabschnitte vorhanden, welche derart ausgebildet sind, dass bei der Fixierung des Schlittens an der Bodenschiene ein Riegelabschnitt in eine jeweilige Ausnehmung in der dazugehörigen Schienen-Längswand der Bodenschiene eingreift.

Schließlich wird gemäß der vorliegenden Erfindung ein Fahrzeug mit einem Fahrzeugboden vorgeschlagen, wobei eine Vorrichtung wie vorgenannt beschrieben vorhanden ist.

### Figurenbeschreibung

Weitere Merkmale und Vorteile der Erfindung sind anhand von in den Figuren stark schematisiert dargestellten Ausführungsbeispielen einer erfindungsgemäßen Bodenschiene näher erläutert.

Im Einzelnen zeigt:
Fig. 1 eine perspektivische Ansicht schräg von oben auf einen vorderen Endabschnitt einer erfindungsgemäßen Bodenschiene,
Fig. 2 einen Ausschnitt einer Bodenschiene gemäß Fig. 1 in Explosionsdarstellung,
Fig. 3 eine perspektivische Frontansicht auf ein vorderes Ende der Bodenschiene gemäß Fig. 1,
Fig. 4 eine perspektivische Ansicht schräg von oben auf einen vorderen Endabschnitt einer weiteren erfindungsgemäßen Bodenschiene,
Fig. 5 einen Ausschnitt einer Bodenschiene gemäß Fig. 4 in Explosionsdarstellung und
Fig. 6 eine perspektivische Frontansicht auf ein vorderes Ende der Bodenschiene gemäß Fig. 4.

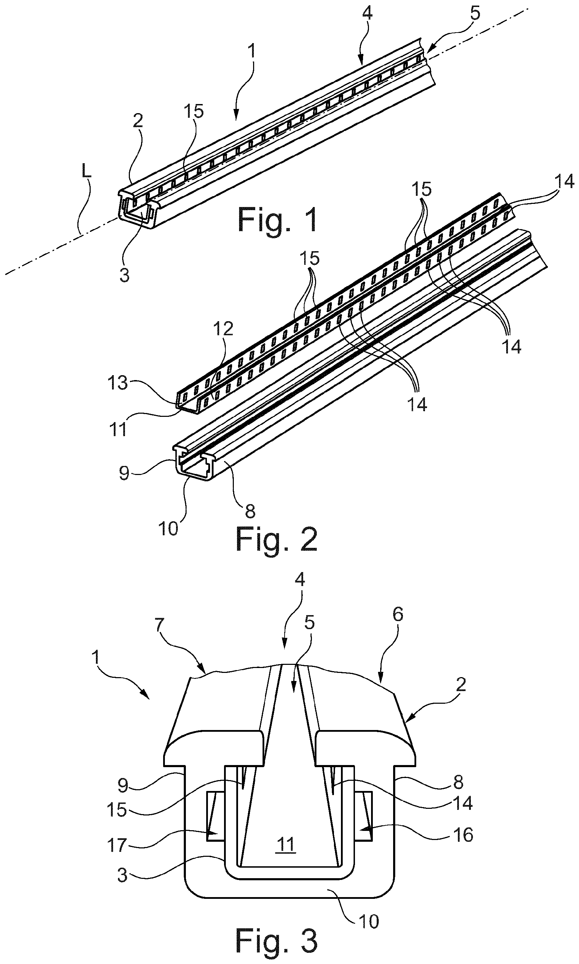

Eine erfindungsgemäße Bodenschiene 1 für ein Fahrzeug (nicht dargestellt) zeigt Fig. 1 in einem Ausschnitt bzw. über eine Teillänge der Bodenschiene 1. Die Bodenschiene 1 ist über ihre vorzugsweise gesamte Länge gemäß der Längsachse L der Bodenschiene 1 von zum Beispiel einem Meter bis z. B. 2 Meter einheitlich ausgebildet.

Die bevorzugt als Fahrzeug-Bodenschiene ausgebildete Bodenschiene 1 umfasst eine Außenschiene 2 und eine Innenschiene 3. Die Bodenschiene 1 ist als Hybridschiene gebildet aus einem Materialmix bzw. aus einer Leichtmetallschiene als Außenschiene 2 und einer als Inlayschiene gestalteten Innenschiene 3 aus einem Edelstahlmaterial. Die Außenschiene 2 besteht zum Beispiel aus einem Aluminiummaterial und ist ein Strangpressprofil. Die Innenschiene 3 ist hier ein aus einem Blech gebildetes Biegeteil vorzugsweise ein Edelstahl-Kantprofil.

Die Bodenschiene 1 ist hohl und weist eine von der Außenschiene 2 gebildete Oberseite 4 mit einem Längsschlitz 5 auf, wobei der Längsschlitz 5 beidseitig von Stegen 6 und 7 der Außenschiene 2 begrenzt wird. Die Stege 6, 7 bilden mit ihren fluchtenden Außenseiten die ebene flache Oberseite 4 der Bodenschiene 1. Die jeweiligen äußeren, dem Längsschlitz 5 gegenüberliegenden Längsseiten der Stege 6 und 7 sind konvex geformt bzw. sind mit einem Radius nach außen abfallend zur von der Oberseite 4 aufgespannten Ebene gestaltet.

Die Außenschiene 2 weist außerdem gegenüberliegende Schienen-Längswände 8 und 9 und einen die Schienen-Längswände 8 und 9 verbindenden Schienenboden 10 auf.

Die Innenschiene 3 weist eine nach oben bzw. zum Längsschlitz 5 hin offene U-Form auf mit einem Innenschienen-Boden 11 und zwei daran rechtwinklig nach oben abstehenden Innenschienen-Wänden 12 und 13.

In etwa auf halber Höhe in einem mittleren Bereich der beiden Innenschienen-Wände 12 und 13 sind fensterartige rechteckige Ausnehmungen 14, 15 vorhanden. Die Ausnehmungen 14 in der Innenschienen-Wand 12 und die Ausnehmungen 15 in der Innenschienen-Wand 13 sind identische fensterartige und rechteckig und liegen quer zur Längsachse L der Bodenschiene 1 exakt fluchtend gegenüber.

Die Ausnehmungen 15 dienen insbesondere zum Verrasten eines an der Bodenschiene 1 von oben aufsetzbaren Schlittens (nicht dargestellt) einer Anbringvorrichtung zur Anbringung und Fixierung von Fahrzeug-Inneneinrichtungen in einem Fahrzeuginneren wie z. B. einem Fahrzeugsitz. Hierfür sind im Fahrzeuginneren an bzw. auf einem Fahrzeugboden des Fahrzeugs vorzugsweise zwei parallel ausgerichtete und gemäß einer Breitenabmessung der betreffenden einzubauenden Einrichtung beabstandete Bodenschienen 1 vorhanden.

Mit verstellbaren Rast- oder Riegelelementen des Schlittens kann dieser an beliebigen Stellen entlang der Bodenschiene 1 über deren Längserstreckung fixiert werden. Zur Erreichung der verschiedenen Stellen ist der Schlitten entlang der Bodenschiene 1 vorzugsweise verfahrbar zum Beispiel über Rollen oder Räder des Schlittens, die oben auf den Stegen 6, 7 abrollen.

Die Innenschiene 3 ist passgenau abgestimmt auf das hohle Innere bzw. die Innen-Kontur der Außenschiene 2. Die in der Außenschiene 2 eingesetzte Innenschiene 3 liegt außenseitig flächig an Innenabschnitten der Außenschiene 2 bzw. der Schienen-Längswände 8 und 9 an. Die Außenschiene 2 und die Innenschiene 3 sind miteinander fest verbunden zum Beispiel vernietet, verschraubt, verklemmt verschweißt oder erst bei der Montage in dem Fahrzeug gemeinsam mit dem Fahrzeugboden verbunden zum Beispiel verschraubt.

Damit die Verrastung des Schlittens und damit der Inneneinrichtungen wie einem Fahrzeugsitz im Fahrzeug noch effektiver und stabiler möglich ist, ist in den beiden Schienen-Längswänden 8 und 9 auf Höhe der Ausnehmungen 14 bzw. 15 jeweils eine rinnenförmige bzw. U-förmige streifenförmige Außenschienen-Ausnehmung 16 und 17 vorgesehen. Die Außenschienen-Ausnehmung 16 und 17 sind auf die Ausnehmungen 14, 15 in der Innenschien 3 abgestimmt, vorzugsweise in der Höhe übereinstimmend zur Höhe der Ausnehmungen 14, 15.

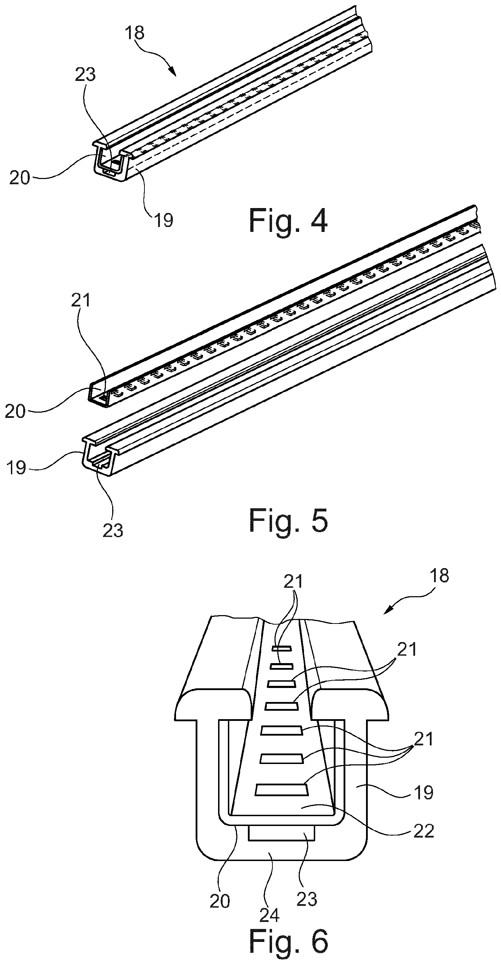

Eine andere erfindungsgemäße Bodenschiene 18 mit einer Außenschiene 19 und einer Innenschiene 20 zeigen die Fig. 4 bis 6.

Die Bodenschiene 18 unterscheidet sich von der Bodenschiene 1 allein durch die abweichende Anordnung von Ausnehmungen 21 in einem Innenschienen-Boden 22 der Innenschiene 20 und einer Außenschienen-Ausnehmung 23 in der Außenschiene 19 bzw. in einem Schienenboden 24 der Außenschiene 19.

Bei der Bodenschiene 18 sind keine weiteren Ausnehmungen in den Seitenwänden der Außenschiene 19 oder der Innenschiene 20 vorhanden. Dies ist aber grundsätzlich möglich.

### Bezugszeichenliste

- 1: Bodenschiene
- 2: Außenschiene
- 3: Innenschiene
- 4: Oberseite
- 5: Längsschlitz
- 6: Steg
- 7: Steg
- 8: Schienen-Längswand
- 9: Schienen-Längswand
- 10: Schienenboden
- 11: Innenschienen-Boden
- 12: Innenschienen-Wand
- 13: Innenschienen-Wand
- 14: Ausnehmung
- 15: Ausnehmung
- 16: Außenschienen-Ausnehmung
- 17: Außenschienen-Ausnehmung
- 18: Bodenschiene
- 19: Außenschiene
- 20: Innenschiene
- 21: Ausnehmung
- 22: Innenschienen-Boden
- 23: Außenschienen-Ausnehmung
- 24: Schienenboden

## Patentansprüche

1. Bodenschiene (1, 18) für ein Fahrzeug, insbesondere Fahrzeug-Bodenschiene, welche für die Anbringung einer Fahrzeug-Inneneinrichtung und/oder einer Sitzanordnung in einem Fahrzeug ausgebildet ist, wobei die Bodenschiene (1, 18) hohl ist und eine Oberseite (4) mit einem Längsschlitz (5) aufweist, wobei die Bodenschiene (1, 18) über ihre Längserstreckung eine als Hohlprofil ausgebildete Außenschiene (2, 19) aufweist mit in Längsrichtung der Bodenschiene (1, 18) sich erstreckenden gegenüberliegenden Schienen-Längswänden (8, 9) und einem Schienenboden (10, 24), wobei der Schienenboden (10, 24) der Oberseite (4) der Bodenschiene (1, 18) gegenüberliegt und die Schienen-Längswände (8,9) miteinander verbindet, und wobei eine Innenschiene (3, 20) vorgesehen ist, die innerhalb der hohlen Außenschiene (2, 19) aufgenommen ist, wobei die Außenschiene (2, 19) aus einem ersten Werkstoff besteht und wobei die Innenschiene (3, 20) aus einem zweiten Werkstoff besteht, **dadurch gekennzeichnet, dass** die Innenschiene (3) in einer Innenschienen-Wand (12, 13) mehrere Ausnehmungen (14, 15) umfasst, wobei in einer an die Innenschienen-Wand (12, 13) angrenzenden Schienen-Längswand (8, 9) der Außenschiene (2) eine Außenschienen-Ausnehmung (16, 17) vorhanden ist, wobei die Außenschienen-Ausnehmung (16, 17) an mehrere der Ausnehmungen (14, 15) in der Innenschienen-Wand (12, 13) anschließt, vorzugsweise an sämtliche der Ausnehmungen (14, 15) in der Innenschienen-Wand (12, 13) anschließt.

2. Bodenschiene (1, 18) nach dem Oberbegriff des Anspruch 1, **dadurch gekennzeichnet, dass** die Bodenschiene (1, 18) über ihre Längserstreckung eine als Hohlprofil ausgebildete Außenschiene (2, 19) aufweist mit in Längsrichtung der Bodenschiene (1, 18) sich erstreckenden gegenüberliegenden Schienen-Längswänden (8, 9) und einem Schienenboden (10, 24), wobei der Schienenboden (10, 24) der Oberseite (4) der Bodenschiene (1, 18) gegenüberliegt und die Schienen-Längswände (8,9) miteinander verbindet, und wobei eine Innenschiene (3, 20) vorgesehen ist, die innerhalb der hohlen Außenschiene (2, 19) aufgenommen ist, wobei die Außenschiene (2, 19) aus einem ersten Werkstoff besteht und wobei die Innenschiene (3, 20) aus einem zweiten Werkstoff besteht, wobei die Innenschiene (20) im Innenschienen-Boden (22) mehrere Ausnehmungen (21) umfasst, die in Längsrichtung der Innenschiene (20) voneinander beabstandet vorhanden sind, wobei in einem Schienenboden der Außenschiene (19) eine Schienenboden-Ausnehmung (23) vorhanden ist, wobei die Schienenboden-Ausnehmung (23) an sämtliche der Ausnehmungen (21) im Innenschienen-Boden (22) anschließt.

3. Bodenschiene nach Anspruch 1 oder nach Anspruch 2, **dadurch gekennzeichnet, dass** die Außenschiene (2, 19) und die Innenschiene (3, 20) fest miteinander verbunden sind.

4. Bodenschiene nach einem der vorhergehenden Ansprüche, **dadurch gekennzeichnet, dass** die Außenschiene (2, 19) aus einem Leichtmetallwerkstoff wie einem Aluminiumwerkstoff gebildet ist.

5. Bodenschiene nach einem der vorhergehenden Ansprüche, **dadurch gekennzeichnet, dass** die Außenschiene (2, 19) ein Strangpressprofil ist.

6. Bodenschiene nach einem der vorhergehenden Ansprüche, **dadurch gekennzeichnet, dass** die Innenschiene (3, 20) aus einem Stahlmaterial gebildet ist.

7. Bodenschiene nach einem der vorhergehenden Ansprüche, **dadurch gekennzeichnet, dass** die Innenschiene (3, 20) als Blech-Kantprofil ausgebildet ist.

8. Bodenschiene nach einem der vorhergehenden Ansprüche, **dadurch gekennzeichnet, dass** die Innenschiene (3, 20) einen Innenschienen-Boden (11, 22) und eine Innenschienen-Wand (12, 13) aufweist, wobei der Innenschienen-Boden (11, 22) und die Innenschienen-Wand (12, 13) abgewinkelt zueinander ausgerichtet sind.

9. Bodenschiene nach einem der vorhergehenden Ansprüche, **dadurch gekennzeichnet, dass** die Innenschiene (3, 20) U-förmig im Querschnitt ausgebildet ist mit einem Innenschienen-Boden (11, 22) und jeweils einer Innenschienen-Wand (12, 13) beidseitig des in Längsrichtung verlaufenden Innenschienen-Bodens (11, 22).

10. Bodenschiene nach einem der vorhergehenden Ansprüche, **dadurch gekennzeichnet, dass** die Innenschiene (3, 20) und/oder die Außenschiene (2, 19) eine Rastkontur aufweist, zur Fixierung eines an der Bodenschiene (1, 18) anbringbaren Rastbauteils wie eines Schlittens.

11. Bodenschiene nach einem der vorhergehenden Ansprüche, **dadurch gekennzeichnet, dass** die Innenschiene (3) in zumindest einer Innenschienen-Wand (12, 13) mehrere Ausnehmungen (14, 15) umfasst, die in Längsrichtung der Innenschiene (3) voneinander beabstandet vorhanden sind.

12. Bodenschiene nach einem der vorhergehenden Ansprüche, **dadurch gekennzeichnet, dass** die Innenschiene (20) im Innenschienen-Boden (22) mehrere Ausnehmungen (21) umfasst, die in Längsrichtung der Innenschiene (20) voneinander beabstandet vorhanden sind.

13. Bodenschiene nach einem der vorhergehenden Ansprüche, **dadurch gekennzeichnet, dass** die Innenschiene (3) in einer Innenschienen-Wand (12, 13) mehrere Ausnehmungen (14, 15) umfasst, wobei in einer an die Innenschienen-Wand (12, 13) angrenzenden Schienen-Längswand (8, 9) der Außenschiene (2) eine Außenschienen-Ausnehmung (16, 17) vorhanden ist, welche an eine Ausnehmung (14,15) in der Innenschienen-Wand (12, 13) anschließt.

14. Bodenschiene nach einem der vorhergehenden Ansprüche, **dadurch gekennzeichnet, dass** die Innenschiene (3) eine erste Innenschienen-Wand (12) mit mehreren Ausnehmungen (14) und eine zweite gegenüberliegende Innenschienen-Wand (13) mit mehreren Ausnehmungen (15) umfasst, wobei in einer an die erste Innenschienen-Wand (12) angrenzende ersten Schienen-Längswand (8) der Außenschiene (2) eine erste Außenschienen-Ausnehmung (16) vorhanden ist, wobei die erste Außenschienen-Ausnehmung (16) an sämtliche der Ausnehmungen (14) in der ersten Innenschienen-Wand (12) anschließt, und wobei in einer an die zweite Innenschienen-Wand (13) angrenzende zweite Schienen-Längswand (9) der Außenschiene (2) eine zweite Außenschienen-Ausnehmung (17) vorhanden ist, wobei die zweite Außenschienen-Ausnehmung (17) an sämtliche der Ausnehmungen (15) in der zweiten Innenschienen-Wand (13) anschließt.

15. Vorrichtung zur Anbringung einer Fahrzeug-Inneneinrichtung und/oder einer Sitzanordnung in einem Fahrzeug, wobei die Vorrichtung einen mit der Inneneinrichtung oder der Sitzanordnung verbindbaren Schlitten und eine Bodenschiene (1, 18) nach einem der vorhergehenden Ansprüche aufweist.

16. Vorrichtung nach Anspruch 15, **dadurch gekennzeichnet, dass** eine Verriegelungsanordnung Ausnehmungen (14-17, 21, 23) umfasst, die in Längsrichtung der Bodenschiene (1, 18) voneinander beabstandet vorhanden sind, und ein Verriegelungselement der Verriegelungsanordnung einen Riegelabschnitt und einen Anlageabschnitt derart aufweist, dass bei der Fixierung des Schlittens der Riegelabschnitt in eine Ausnehmung (14-17, 21, 23) in der Bodenschiene (1, 18) eintaucht und der Anlageabschnitt an einer Innenseite eines Stützabschnitts in Anlage kommt, so dass im verriegelten Zustand mit dem Riegelabschnitt eine Bewegung des Schlittens in Längsrichtung der Bodenschiene (1, 18) blockiert ist und mit dem Anlageabschnitt ein Abheben des Schlittens von der Bodenschiene (1, 18) unterbunden ist.

17. Fahrzeug mit einem Fahrzeugboden, wobei eine Vorrichtung nach einem der Ansprüche 15 oder 16 vorhanden ist.

## Claims

1. Floor rail (1, 18) for a vehicle, in particular vehicle floor rail, which is configured for attaching a vehicle interior equipment and/or a seat assembly in a vehicle, wherein the floor rail (1, 18) is hollow and has an upper side (4) with a longitudinal slot (5), wherein the floor rail (1, 18) has, over its longitudinal extent, an outer rail (2, 19) which is configured as a hollow profile with opposite rail longitudinal walls (8, 9) extending in the longitudinal direction of the floor rail (1, 18) and with a rail base (10, 24), wherein the rail base (10, 24) lies opposite the upper side (4) of the floor rail (1, 18) and connects the rail longitudinal walls (8, 9) to each other, and wherein an inner rail (3, 20) is provided which is accommodated within the hollow outer rail (2, 19), wherein the outer rail (2, 19) is composed of a first material, and wherein the inner rail (3, 20) is composed of a second material, **characterized in that** the inner rail (3) comprises a plurality of recesses (14, 15) in an inner rail wall (12, 13), wherein an outer rail recess (16, 17) is present in a rail longitudinal wall (8, 9) of the outer rail (2), the rail longitudinal wall (8, 9) being adjacent to the inner rail wall (12, 13), wherein the outer rail recess (16, 17) adjoins a plurality of the recesses (14, 15) in the inner rail wall (12, 13), preferably adjoins all of the recesses (14, 15) in the inner rail wall (12, 13).

2. Floor rail (1, 18) according to the preamble of Claim 1, **characterized in that** the floor rail (1, 18) has, over its longitudinal extent, an outer rail (2, 19) which is configured as a hollow profile with opposite rail longitudinal walls (8, 9) extending in the longitudinal direction of the floor rail (1, 18) and with a rail base (10, 24), wherein the rail base (10, 24) lies opposite the upper side (4) of the floor rail (1, 18) and connects the rail longitudinal walls (8, 9) to each other, and wherein an inner rail (3, 20) is provided which is accommodated within the hollow outer rail (2, 19), wherein the outer rail (2, 19) is composed of a first material, and wherein the inner rail (3, 20) is composed of a second material, wherein the inner rail (20) comprises, in the inner rail base (22), a plurality of recesses (21) which are present spaced apart from one another in the longitudinal direction of the inner rail (20), wherein there is a rail base recess (23) in a rail base of the outer rail (19), wherein the rail base recess (23) adjoins all of the recesses (21) in the inner rail base (22).

3. Floor rail according to Claim 1 or according to Claim 2, **characterized in that** the outer rail (2, 19) and the inner rail (3, 20) are connected fixedly to each other.

4. Floor rail according to one of the preceding claims, **characterized in that** the outer rail (2, 19) is formed from a light metal material, such as an aluminium material.

5. Floor rail according to one of the preceding claims, **characterized in that** the outer rail (2, 19) is an extruded profile.

6. Floor rail according to one of the preceding claims, **characterized in that** the inner rail (3, 20) is formed from a steel material.

7. Floor rail according to one of the preceding claims, **characterized in that** the inner rail (3, 20) is configured as a sheet-metal edge profile.

8. Floor rail according to one of the preceding claims, **characterized in that** the inner rail (3, 20) has an inner rail base (11, 22) and an inner rail wall (12, 13), wherein the inner rail base (11, 22) and the inner rail wall (12, 13) are oriented in an angled manner with respect to each other.

9. Floor rail according to one of the preceding claims, **characterized in that** the inner rail (3, 20) is U-shaped in cross section with an inner rail base (11, 22) and a respective inner rail wall (12, 13) on either side of the inner rail base (11, 22), which runs in the longitudinal direction.

10. Floor rail according to one of the preceding claims, **characterized in that** the inner rail (3, 20) and/or the outer rail (2, 19) has a latching contour, for fixing a latching component, such as carriage, which can be attached to the floor rail (1, 18).

11. Floor rail according to one of the preceding claims, **characterized in that** the inner rail (3) comprises, in at least one inner rail wall (12, 13), a plurality of recesses (14, 15) which are spaced apart from one another in the longitudinal direction of the inner rail (3).

12. Floor rail according to one of the preceding claims, **characterized in that** the inner rail (20) comprises, in the inner rail base (22), a plurality of recesses (21) which are spaced apart from one another in the longitudinal direction of the inner rail (20).

13. Floor rail according to one of the preceding claims, **characterized in that** the inner rail (3) comprises a plurality of recesses (14, 15) in an inner rail wall (12, 13), wherein an outer rail recess (16, 17) which adjoins a recess (14, 15) in the inner rail wall (12, 13) is present in a rail longitudinal wall (8, 9) of the outer rail (2), the rail longitudinal wall (8, 9) being adjacent to the inner rail wall (12, 13).

14. Floor rail according to one of the preceding claims, **characterized in that** the inner rail (3) comprises a first inner rail wall (12) with a plurality of recesses (14) and a second, opposite inner rail wall (13) with a plurality of recesses (15), wherein a first outer rail recess (16) is present in a first rail longitudinal wall (8) of the outer rail (2), the rail longitudinal wall (8) being adjacent to the first inner rail wall (12), wherein the first outer rail recess (16) adjoins all of the recesses (14) in the first inner rail wall (12), and wherein a second outer rail recess (17) is present in a second rail longitudinal wall (9) of the outer rail (2), the rail longitudinal wall (9) being adjacent to the second inner rail wall (13), wherein the second outer rail recess (17) adjoins all of the recesses (15) in the second inner rail wall (13).

15. Device for attaching vehicle interior equipment and/or a seat assembly in a vehicle, wherein the device has a carriage, which is connectable to the interior equipment or to the seat assembly, and a floor rail (1, 18) according to one of the preceding claims.

16. Device according to Claim 15, **characterized in that** a locking assembly comprises recesses (14-17, 21, 23) which are spaced apart from one another in the longitudinal direction of the floor rail (1, 18), and a locking element of the locking assembly has a latching portion and a contact portion in such a manner that, during the fixing of the carriage, the latching portion enters a recess (14-17, 21, 23) in the floor rail (1, 18) and the contact portion comes into contact with an inner side of a support portion such that, in the locked state, a movement of the carriage in the longitudinal direction of the floor rail (1, 18) is blocked by the latching portion and the carriage is prevented from lifting off from the floor rail (1, 18) by the contact portion.

17. Vehicle with a vehicle floor, wherein a device according to either of Claims 15 and 16 is present.

## Revendications

1. Rail de plancher (1, 18) pour un véhicule, en particulier rail de plancher de véhicule, qui est réalisé pour le montage d'un équipement intérieur de véhicule et/ou d'un ensemble de siège dans un véhicule, le rail de plancher (1, 18) étant creux et présentant une face supérieure (4) dotée d'une fente longitudinale (5), le rail de plancher (1, 18) présentant sur son étendue longitudinale un rail extérieur (2, 19) réalisé sous forme de profilé creux et doté de parois longitudinales de rail opposées (8, 9) s'étendant dans la direction longitudinale du rail de plancher (1, 18) et d'un fond de rail (10, 24), le fond de rail (10, 24) étant opposé à la face supérieure (4) du rail de plancher (1, 18) et reliant l'une à l'autre les parois longitudinales de rail (8, 9), et un rail intérieur (3, 20) étant prévu qui est reçu à l'intérieur du rail extérieur creux (2, 19), le rail extérieur (2, 19) étant composé d'un premier matériau, et le rail intérieur (3, 20) étant composé d'un deuxième matériau,
**caractérisé en ce que** le rail intérieur (3) comprend plusieurs évidements (14, 15) dans une paroi de rail intérieur (12, 13), dans lequel il existe un évidement de rail extérieur (16, 17) dans une paroi longitudinale de rail (8, 9) du rail extérieur (2), adjacente à la paroi de rail intérieur (12, 13), l'évidement de rail extérieur (16, 17) étant contigu à plusieurs des évidements (14, 15) dans la paroi de rail intérieur (12, 13), de préférence à tous les évidements (14, 15) dans la paroi de rail intérieur (12, 13).

2. Rail de plancher (1, 18) selon le préambule de la revendication 1, **caractérisé en ce que** le rail de plancher (1, 18) présente sur son étendue longitudinale un rail extérieur (2, 19) réalisé sous forme de profilé creux doté de parois longitudinales de rail opposées (8, 9) s'étendant dans la direction longitudinale du rail de plancher (1, 18) et d'un fond de rail (10, 24), le fond de rail (10, 24) étant opposé à la face supérieure (4) du rail de plancher (1, 18) et reliant l'une à l'autre les parois longitudinales de rail (8, 9), et un rail intérieur (3, 20) étant prévu qui est reçu à l'intérieur du rail extérieur creux (2, 19), le rail extérieur (2, 19) étant composé d'un premier matériau, et le rail intérieur (3, 20) étant composé d'un deuxième matériau, le rail intérieur (20) comprenant dans le fond de rail intérieur (22) plusieurs évidements (21) qui existent à distance les uns des autres dans la direction longitudinale du rail intérieur (20), dans lequel il existe un évidement de fond de rail (23) dans un fond de rail du rail extérieur (19), l'évidement de fond de rail (23) étant contigu à tous les évidements (21) dans le fond de rail intérieur (22).

3. Rail de plancher selon la revendication 1 ou selon la revendication 2, **caractérisé en ce que** le rail extérieur (2, 19) et le rail intérieur (3, 20) sont reliés solidement l'un à l'autre.

4. Rail de plancher selon l'une quelconque des revendications précédentes, **caractérisé en ce que** le rail extérieur (2, 19) est formé en un matériau à base de métal léger, comme un matériau à base d'aluminium.

5. Rail de plancher selon l'une quelconque des revendications précédentes, **caractérisé en ce que** le rail extérieur (2, 19) est un profilé extrudé.

6. Rail de plancher selon l'une quelconque des revendications précédentes, **caractérisé en ce que** le rail intérieur (3, 20) est formé en un matériau à base d'acier.

7. Rail de plancher selon l'une quelconque des revendications précédentes, **caractérisé en ce que** le rail intérieur (3, 20) est réalisé sous forme de profilé chanfreiné en tôle.

8. Rail de plancher selon l'une quelconque des revendications précédentes, **caractérisé en ce que** le rail intérieur (3, 20) présente un fond de rail intérieur (11, 22) et une paroi de rail intérieur (12, 13), le fond de rail intérieur (11, 22) et la paroi de rail intérieur (12, 13) étant orientés de manière à former un angle l'un par rapport à l'autre.

9. Rail de plancher selon l'une quelconque des revendications précédentes, **caractérisé en ce que** le rail intérieur (3, 20) est réalisé en forme de U en section transversale, comprenant un fond de rail intérieur (11, 22) et respectivement une paroi de rail intérieur (12, 13) des deux côtés du fond de rail intérieur (11, 22) s'étendant dans la direction longitudinale.

10. Rail de plancher selon l'une quelconque des revendications précédentes, **caractérisé en ce que** le rail intérieur (3, 20) et/ou le rail extérieur (2, 19) présente(nt) un contour d'encliquetage pour fixer un composant d'encliquetage, tel qu'un coulisseau, au rail de plancher (1, 18).

11. Rail de plancher selon l'une quelconque des revendications précédentes, **caractérisé en ce que** le rail intérieur (3) comprend dans au moins une paroi de rail intérieur (12, 13) plusieurs évidements (14, 15) qui existent à distance les uns des autres dans la direction longitudinale du rail intérieur (3).

12. Rail de plancher selon l'une quelconque des revendications précédentes, **caractérisé en ce que** le rail intérieur (20) comprend dans le fond de rail intérieur (22) plusieurs évidements (21) qui existent à distance les uns des autres dans la direction longitudinale du rail intérieur (20).

13. Rail de plancher selon l'une quelconque des revendications précédentes, **caractérisé en ce que** le rail intérieur (3) comprend plusieurs évidements (14, 15) dans une paroi de rail intérieur (12, 13), dans lequel, dans une paroi longitudinale de rail (8, 9) du rail extérieur (2), adjacente à la paroi de rail intérieur (12, 13), il existe un évidement de rail extérieur (16, 17) qui est contigu à un évidement (14, 15) dans la paroi de rail intérieur (12, 13).

14. Rail de plancher selon l'une quelconque des revendications précédentes, **caractérisé en ce que** le rail intérieur (3) comprend une première paroi de rail intérieur (12) dotée de plusieurs évidements (14) et une deuxième paroi de rail intérieur opposée (13) dotée de plusieurs évidements (15), dans lequel, dans une première paroi longitudinale de rail (8) du rail extérieur (2), adjacente à la première paroi de rail intérieur (12), il existe un premier évidement de rail extérieur (16), le premier évidement de rail extérieur (16) étant contigu à tous les évidements (14) dans la première paroi de rail intérieur (12), et dans lequel, dans une deuxième paroi longitudinale de rail (9) du rail extérieur (2), adjacente à la deuxième paroi de rail intérieur (13), il existe un deuxième évidement de rail extérieur (17), le deuxième évidement de rail extérieur (17) étant contigu à tous les évidements (15) dans la deuxième paroi de rail intérieur (13).

15. Dispositif permettant de monter un équipement intérieur de véhicule et/ou un ensemble de siège dans un véhicule, le dispositif présentant un coulisseau pouvant être relié à l'équipement intérieur ou à l'ensemble de siège et un rail de plancher (1, 18) selon l'une quelconque des revendications précédentes.

16. Dispositif selon la revendication 15, **caractérisé en ce qu'**un agencement de verrouillage comprend des évidements (14 à 17, 21, 23) qui sont espacés les uns des autres dans la direction longitudinale du rail de plancher (1, 18), et un élément de verrouillage de l'agencement de verrouillage présente une partie de verrou et une partie de butée de telle sorte que lorsque le coulisseau est fixé, la partie de verrou plonge dans un évidement (14 à 17, 21, 23) dans le rail de plancher (1, 18) et la partie de butée vient en butée contre une face intérieure d'une partie d'appui de sorte qu'à l'état verrouillé avec la partie de verrou, un déplacement du coulisseau dans la direction longitudinale du rail de plancher (1, 18) est bloqué, et que la partie de butée empêche tout décollement du coulisseau du rail de plancher (1, 18).

17. Véhicule comprenant un plancher de véhicule, dans lequel il existe un dispositif selon l'une quelconque des revendications 15 ou 16.
